# EUROPEAN PATENT SPECIFICATION

(11) **EP 2 886 560 B1**
(45) Date of publication and mention of the grant of the patent: **10.05.2017**
(21) Application number: 14170966.7
(22) Date of filing: 03.06.2014
(51) Int. Cl.: C08F 114/06, C08F 14/06, C08F 2/06, C08F 4/50

(54) **Process for the manufacture of vinyl chloride polymers**
Verfahren zur Herstellung von Vinylchloridpolymeren
Procédé pour la fabrication de polymères de chlorure de vinyle

(30) Priority: 20.12.2013 EP 13199036
(43) Date of publication of application: 24.06.2015
(73) Proprietor: Solvay SA, 1120 Bruxelles (BE)
(72) Inventor: Hermant, Thomas, 1340 Ottignies (BE); Bodard, Vincent, 5001 Namur (BE)
(74) Representative: Vande Gucht, Anne

(56) References cited:
- HANNES LEICHT: "Incorporation of Vinyl Chloride in Insertion Polymerization", ANGEW. CHEM. INT. ED., vol. 52, 2013, pages 3963-3966, XP002731973,

## Description

The present invention relates to a process for the manufacture of vinyl chloride polymers.

Metal-catalyzed coordination - insertion polymerization of olefins, like ethylene and propylene, is practiced on a large scale. However, coordination-insertion polymerization of polar vinyl monomers still remains a significant challenge in polymer synthesis (A. Nakamura et al., Chem. Rev., 2009, 109, 5215-5244).

With the development of late transition polymerization catalysts, significant progress in the copolymerization of polar vinyl monomers has been made, such that ethylene copolymers with acrylates, acrylonitrile, vinyl acetate, vinyl fluoride, allylic monomers, acrylic acid, acrylamides are now available by insertion polymerization. Even the homooligomerization of methyl acrylate has been reported.

Among the polar vinyl monomers, vinyl chloride (VC) is a particularly attractive monomer for coordination - insertion polymerization/copolymerization because polyvinyl chloride polymers (PVC) and VC copolymers are important commercial materials.

First attempts made to polymerize VC by coordination - insertion led to the conclusion that the polymerization is problematic due to the side reactions arising from the activated chlorine atom, particularly β-chloride elimination. The reason of this reactivity is not the reluctance of VC to insert into a metal-carbon bond, but the high thermodynamic propensity for β-chloride elimination after net 1,2-VC insertion to form olefin products and catalytically inactive metal-chloro complexes. While calculations using density functional theory (DFT) (Harold W. Boone, Phillip S. Athey, Michael J. Mullins, Dean Philipp, Richard Muller and William A. Goddard, J. Am. Chem. Soc., 2002, 124, 8790-8791 and Dean M. Philipp, Richard P. Muller, William A. Goddard, III, Joey Storer, Mark McAdon and Mike Mullins, J. Am. Chem. Soc., 2002, 124, 10198-10210) and experimental evidence point to an initial 2,1-insertion of VC into the metal-carbon bond, the propensity of late transition polymerization catalysts for "chain-walking" has been identified as source of the detrimental 1,2-net insertion of VC in, e.g. α-diimine palladium catalysts (Stephen R. Foley, Robert A. Stockland, Jr., Han Shen and Richard F. Jordan, J. Am. Chem. Soc., 2003, 125, 4350-4361 and Stefan M. Kilyanek, Edward J. Stoebenau, III, Nawaporn Vinayavekhin and Richard F. Jordan, Organometallics, 2010, 29, 1750-1760). A similar reactivity towards VC has been experimentally disclosed for bis(imino)pyridine- iron and cobalt complexes, for salicylaldiminato- and for phosphineenolato nickel complexes (Stephen R. Foley, Robert A. Stockland, Jr., Han Shen and Richard F. Jordan, J. Am. Chem. Soc., 2003, 125, 4350-4361).

Recently, cationic phosphine-phosphine oxide palladium catalysts have been reported to exhibit reduced ethylene polymerization activity in the presence of VC (Brad P. Carrow and Kyoko Nozaki, J. Am. Chem. Soc., 2012, 134, 8802-8805). However, ethylene homopolymer without detectable chlorine content was formed by these catalysts.

Very recently, it was however demonstrated that specific phosphine-sulfonato palladium complexes catalyze the formation of chlorinated copolymers from ethylene and VC owing to a partial suppression of chain walking after monomer insertion (Hannes Leicht, Inigo Göttker-Schnetmann and Stefan Mecking, Angew. Chem. Int. Ed., 2013, 52, 3963-3966). This was the first time that an insertion copolymerization of VC with ethylene has yielded chlorine-containing copolymers.

However, while this study led to the incorporation of VC units into a ethylene polymer chain, it did not lead to the preparation of VC polymers. It therefore remains a need to obtain such polymers.

The present invention aims to overcome the above-mentioned drawbacks by providing a process allowing the manufacture of VC polymers.

Accordingly, the present invention relates to a process for the manufacture of a vinyl chloride polymer by polymerization of vinyl chloride and possibly of at least one comonomer of vinyl chloride, characterized in that the catalyst used for the polymerization comprises at least one copper (I) hydride.

By copper (I), it is meant in the text of the present specification, copper at the oxidation stage I.

By at least one copper (I) hydride, it is meant in the text of the present specification, that the catalyst used for the polymerisation comprises one or more than one copper (I) hydride.

By "the catalyst used for the polymerization comprises", it is meant in the text of the present application, that the catalyst may comprise other catalyst(s) and/or cocatalyst(s), preferably cocatalyst(s), different from than the copper(I) hydride(s). The catalyst used for the polymerization preferably consists essentially of, more preferably consists of, at least one copper(I) hydride.

The copper (I) hydride responds advantageously to Formula 1

*n*L----Cu-R Formula 1

in which Cu is copper (I), R is H (hydrogen) or D (deuterium), L is a ligand and *n* is an integer equal to or higher than 1 representing the number of coordination link(s) between Cu and L.

When n is higher than 1, L in *n*L can be the same ligand or different ligands.

*n* is preferably an integer equal to 1, 2, 3 or 4; more preferably an integer equal to 1, 2 or 3 and most preferably an integer equal to 1 or 2 and particularly most preferably n is equal to 2.

L, the ligand, is preferably selected from triphenyl phosphine (PPh₃), triphenyl phosphine oxide (OPPh₃), 2,2'-bis(diphenylphosphino)-1,1'-binaphthyl (BINAP) the formula of which is represented by Formula 2 below or a mixture thereof

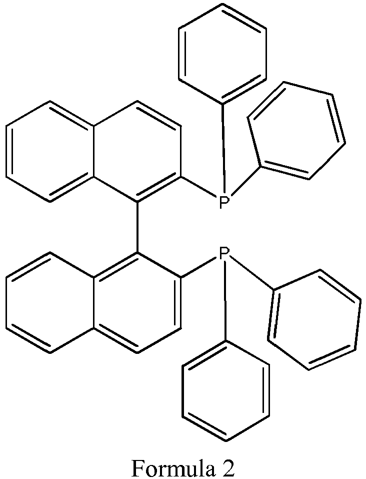

BINAP can be the racemic or the chiral compound.

The catalyst used for the polymerization comprises at least one copper (I) hydride which preferably responds to Formula 1 in which Cu is copper (I), R is H (hydrogen), L is a ligand selected from triphenyl phosphine (PPh₃), triphenyl phosphine oxide (OPPh₃), 2,2'-bis(diphenylphosphino)-1,1'-binaphthyl (BINAP) or a mixture thereof, and *n* is an integer equal to 1, 2, 3 or 4.

The catalyst used for the polymerization comprises at least one copper (I) hydride which more preferably comprises either (BINAP)Cu(I)H named [2,2'-bis(diphenylphosphino-κ-*P*)-1,1'-binaphthyl] hydridocopper (I) responding to Formula 4 (first embodiment), or (PPh₃)₂Cu(I)H named [bis(triphenylphosphine-κ-*P*)] hydridocopper (I) responding to Formula 5 (second embodiment) or (OPPh₃)₂Cu(I)H named [bis(triphenylphosphine oxide-κ-*O*)] hydridocopper (I) responding to Formula 6 (third embodiment).

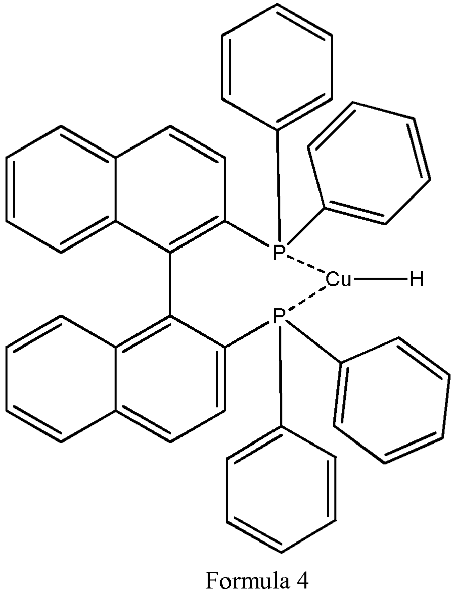

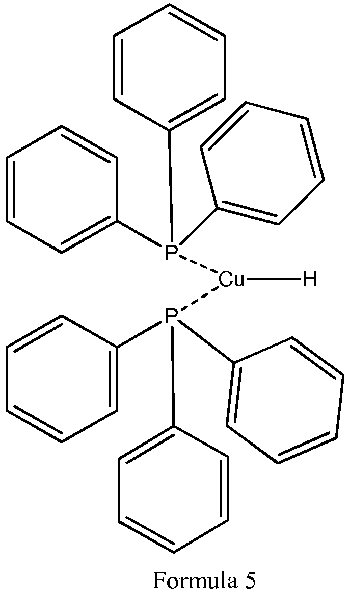

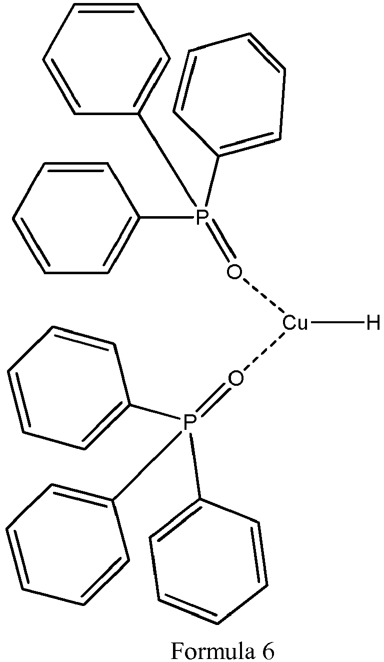

By the wording "copper (I) hydride which comprises", it is meant in the text of the present specification, that the copper (I) hydride, for each embodiment from first to third, comprises at least the copper (I) hydride mentioned above.

The catalyst used for the polymerization can be prepared while being isolated from the media used for its preparation or it can be prepared *in-situ,* before use in polymerization. Preferably, it is prepared *in-situ* before use in polymerization.

By the wording *in-situ,* it is meant in the present specification, that the catalyst is prepared and used in polymerization without being separated from the media used for its preparation.

The catalyst can be prepared by any process. A preferred process, particularly when it is prepared *in-situ,* is that the catalyst is formed by mixing 3 components i.e. a component (1) which is a source of copper (I), a component (2) which is the ligand L as defined above and a component (3) which is a source of hydride, in an organic solvent.

Preferred component (1) is CuF(PPh₃)₃ which can be prepared from CuF₂ or from CuSO₄ and HF, as source of copper.

Examples of components (3) are siloxanes responding to formula RSiH among which TMDS (tetramethyldisiloxane), PhSiH₃, Ph₂SiH₂, Ph₃SiH, Et₃SiH, (EtO)₂MeSiH, PhMe₂SiH, (MeO)₃SiH, Cl₃SiH and PMHS (polymethylhydrosiloxane) responding to Formula 3

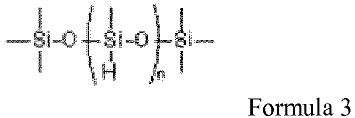

The organic solvent can be any appropriate organic solvent and is advantageously THF or toluene.

The process according to the invention is a process for the manufacture of a vinyl chloride polymer involving the use of a copper catalyst. Advantageously, the process according to the invention is a process for the manufacture of a vinyl chloride polymer by coordination - insertion polymerization of vinyl chloride and possibly of at least one comonomer of vinyl chloride.

The expression "coordination - insertion polymerization" is understood to mean, for the purposes of the present invention, an addition polymerization in which monomer adds to a growing macromolecule through an organometallic active center. This kind of polymerization is also often simply called insertion polymerization.

The polymer manufactured by the process according to the present invention is a vinyl chloride polymer.

In the text of the present specification, the terms "polymer", "copolymer", and "homopolymer" are used indifferently in the singular as well as in the plural.

The expression "vinyl chloride polymer" is understood to mean, for the purposes of the present invention, all polymers containing advantageously at least 50 %, preferably at least 60 %, more preferably at least 70 %, most preferably at least 75 % and particularly most preferably at least 85 % by weight of monomeric units derived from vinyl chloride (monomer). These polymers are therefore advantageously either vinyl chloride homopolymers (containing 100 % by weight of units derived from vinyl chloride) or copolymers of vinyl chloride with one or more than one ethylenically unsaturated monomers (called comonomers) selected from the vinylic esters (preferably vinyl acetate) and the (meth) acrylic monomers (preferably n-butyl acrylate and methylmethacrylate). The polymer manufactured by the process according to the invention is preferably a vinyl chloride homopolymer or a copolymer of vinyl chloride with vinyl acetate and is more preferably a vinyl chloride homopolymer.

The polymerization takes place at a temperature advantageously of at least - 75, preferably of at least - 50, more preferably of at least - 25, particularly more preferably of at least 5, most preferably of at least 20 and particularly most preferably of at least 40°C.

The polymerization takes place at a temperature advantageously of at most 110, preferably of at most 100, more preferably of at most 90, particularly more preferably of at most 80, most preferably of at most 70 and particularly most preferably of at most 60°C.

Good results can be obtained when the polymerization takes place at a temperature comprised between 5 and 90°C. Very good results can be obtained when the polymerization takes place at temperature comprised between 20 and 80°C.

The ratio of the number of moles of VC and possibly of the at least one comonomer of vinyl chloride, to the number of moles of catalyst (i.e. n_{vc}:n_{cat}), advantageously at the beginning of the polymerization, is comprised advantageously between 100 and 10 000 000, preferably between 100 and 1 000 000, more preferably between 100 and 500 000, particularly more preferably between 100 and 100 000, most preferably between 100 and 50 000 and particularly most preferably between 100 and 25 000. Good results can be obtained when such ratio is comprised between 100 and 10 000. Very good results can be obtained when such ratio is comprised between 100 and 4000.

The process according to the invention can be a batch process or a continuous process. Preferably, the process according to the invention is a batch process.

The following examples are intended to illustrate the invention without however limiting the scope thereof.

### Catalyst A

The catalyst A used in example 1 comprising [2,2'-bis(diphenylphosphino-*κ-P*)*-*1,1'-binaphthyl] hydridocopper (I) was synthesized in two steps as described below.

### First step : Synthesis of tris[triphenylphosphine-κ-P)] fluorocopper (I) (CuF(PPh₃)₃)

In a 250 ml flask fitted with a ground glass neck and a magnetic stirring bar, topped with a condenser and an argon balloon, difluorocopper (II) (CuF₂) (1.03 g, 10.0 mmol, 1.0 equiv.) and triphenyl phosphine (PPh₃) (9.18 g, 35.0 mmol, 3.5 equiv.) were placed in suspension in non-distilled methanol (100 ml). The reaction mixture was heated to reflux during 2h30. The solution was then hot filtered in order to remove any solid residue still present then the methanol was reduced to a volume of 40 ml. After one night in a cold chamber at 4°C, white crystals were formed. These were filtered, rinsed with a few cold methanol and air dried. The mother liquors were again concentrated under vacuum in methanol (20 ml). After a night in a cold chamber, white crystals were again isolated.

### Second step : Synthesis of catalyst A

Catalyst A was prepared *in-situ* before use in polymerization. 50 ml of THF previously degassed under a flux of nitrogen during 1 hour at ambient temperature were introduced in a stainless steel autoclave fitted with a magnetic stirring bar. [Tris(triphenylphosphine-κ-*P*)] fluorocopper (I) obtained in step 1 (0.149 g, 0.16 mmol, 1.0 equiv.) and 2,2'-bis(diphenylphosphino)-1,1'-binaphthyl (BINAP) (0.100 g, 0.16 mmol, 1.0 equiv.) were then introduced into the autoclave. The reaction media was then placed under agitation during 5 minutes at the end of which the solution took a yellowish color. Polymethylhydrosiloxane (0.051 g, 0.80 mmol, 5.0 equiv.) was then added as hydride source and the solution took immediately an orange color. After stirring during 5 minutes, the magnetic stirring bar was removed from the autoclave and the autoclave containing the catalyst A comprising [2,2'-bis(diphenylphosphino-κ-*P*)-1,1'-binaphthyl] hydridocopper (I) freshly prepared (solution A) was then carefully closed.

### Catalyst B

The catalyst B used in example 2 comprising [bis(triphenylphosphine oxide-κ-*O*)] hydridocopper (I) was synthesized in two steps according to the same procedure as described above for catalyst A but by replacing 1.0 equiv. of BINAP by 4.0 equiv. of OPPh₃ (0.234 g, 0.84 mmol) and by using 0.196 g (0.21 mmol; 1 equiv.) of [tris(triphenylphosphine-κ-*P*)] fluorocopper (I) and 0.067 g (1.05 mmol, 5 equiv.) of polymethylhydrosiloxane.

### Other materials

Vinyl chloride supplied by SOLVAY S.A.

Tetrahydrofuran (THF) absolute, over molecular sieve (H₂O <0.005%), containing ∼0.025% 2,6-di-tert-butyl-4-methylphenol as stabilizer, ≥99.5% (GC) supplied by Sigma-Aldrich.

### General procedure for the polymerization

Polymerization was performed in a stainless steel autoclave equipped with a probe for temperature and pressure. The temperature was regulated thanks to a thermostat bath. The autoclave in which 50 ml of freshly prepared solution A or of freshly prepared solution B have been introduced was placed under nitrogen flux during 5 minutes under gentle agitation (< 100 rpm). Nitrogen flux was then stopped and VC (10 g, 0.154 mol) was introduced at room temperature. The exact amount of VC was determined by weighting the storage cylinder before and after the polymerization. The mixture was then stirred with 300 rpm and the autoclave was warmed to 50°C. After 24 hours, the autoclave was brought to room temperature. The VC was vented slowly and the autoclave was purged with nitrogen with a cannula for at least 1 hour. Methanol (1 g, 0.031 mol) was then introduced in the autoclave and the mixture was transferred into a 250 ml roundbottom flask. The solvent was removed in vacuo to yield a crude product which was solubilised in 5 ml THF and suspended in 20 ml methanol leading to the formation of a precipitate which was then filtered off. The precipitate was then dried in vacuum at 25°C and weighted.

### Characterization of the obtained products by ¹H NMR and ¹³C NMR

The product obtained at the issue of the polymerization (the precipitate) was characterized by ¹H NMR on a Bruker AVANCE 500 MHz spectrometer (sample dissolved in deuterated THF, 30°C) and by ¹³C NMR on a Bruker AVANCE 400 MHz (sample dissolved in deuterated dioxane, 50°C).

### Examples 1 and 2 (according to the invention)

Examples 1 and 2 were performed according to the general procedure for the polymerization detailed above. All the conditions and results are summarized in Table 1 below.

n_{vc}:n_{cat} is the ratio of the number of moles of VC to the number of moles of copper catalyst at the beginning of the polymerization.

TON is the turnover number i.e. the ratio of the number of moles of monomer in polymer to the number of moles of copper catalyst.

**Table 1**

| Example | Catalyst | T (°C) | Amount catalyst [mmol] | VC [mmol] | n_{VC}:n_{cat} | Weight of precipitate [mg] | TON |
|---|---|---|---|---|---|---|---|
| 1 | Solution A | 50 | 0,16 | 154 | 962 | 80 | 8 |
| 2 | Solution B | 50 | 0.21 | 154 | 733 | 22 | 1.7 |

The characterization of the obtained products (precipitates) by ¹H NMR identified the signals which are characteristic of PVC i.e. the signal between 2 and 2.7 ppm for the -CHCl-C*H₂*- group and the one between 4.3 and 4.8 ppm for the -C*H*Cl-CH₂- group.

The characterization of the obtained products (precipitates) by ¹³C NMR identified the signal which is characteristic of PVC i.e. the one at about 56 ppm for the -CHCl- group.

The obtained polymers are therefore PVC without any doubt.

## Claims

1. Process for the manufacture of a vinyl chloride polymer by polymerization of vinyl chloride and possibly of at least one comonomer of vinyl chloride, **characterized in that** the catalyst used for the polymerization comprises at least one copper (I) hydride.

2. Process according to Claim 1, wherein the copper (I) hydride responds to Formula 1
*n*L----Cu-R Formula 1
in which Cu is copper (I), R is H (hydrogen) or D (deuterium), L is a ligand and *n* is an integer equal to or higher than 1 representing the number of coordination link(s) between Cu and L.

3. Process according to Claim 2, wherein n is an integer equal to 1, 2, 3 or 4.

4. Process according to either Claim 2 or 3, wherein L is selected from triphenyl phosphine (PPh₃), triphenyl phosphine oxide (OPPh₃), 2,2'-bis(diphenylphosphino)-1,1'-binaphthyl (BINAP) the formula of which is represented by Formula 2 below or a mixture thereof.

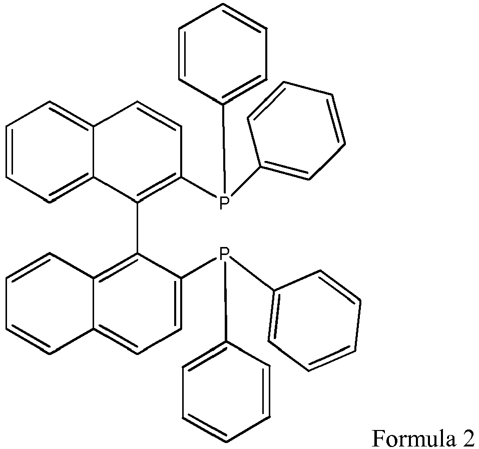

5. Process according to any one of Claims 1 to 4, **characterized in that** the catalyst used for the polymerization comprises at least one copper (I) hydride which responds to Formula 1
*n*L----Cu-R Formula 1
in which Cu is copper (I), R is H (hydrogen), L is a ligand selected from triphenyl phosphine (PPh₃), triphenyl phosphine oxide (OPPh₃), 2,2'-bis(diphenylphosphino)-1,1'-binaphthyl (BINAP) or a mixture thereof, and n is an integer equal to 1, 2, 3 or 4.

6. Process according to any one of Claims 1 to 5, **characterized in that** the catalyst used for the polymerization comprises at least one copper (I) hydride which comprises either (BINAP)Cu(I)H named [2,2'-bis(diphenylphosphino-κ-*P*)-1,1'-binaphthyl] hydridocopper (I) responding to Formula 4, or (PPh₃)₂Cu(I)H named [bis(triphenylphosphine-κ-*P*)] hydridocopper (I) responding to Formula 5 or (OPPh₃)₂Cu(I)H named [bis(triphenylphosphine oxide-κ-*O*)] hydridocopper (I) responding to Formula 6.

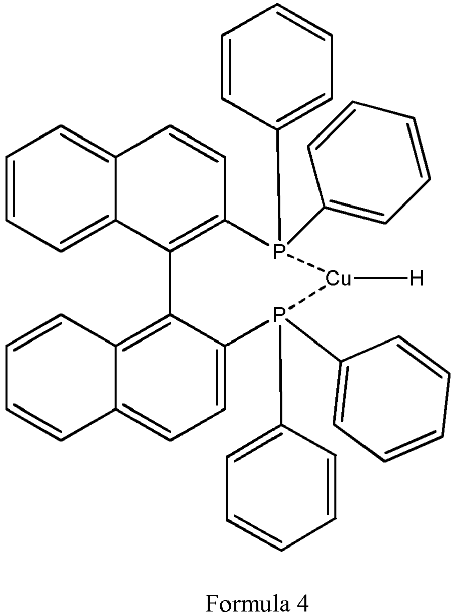

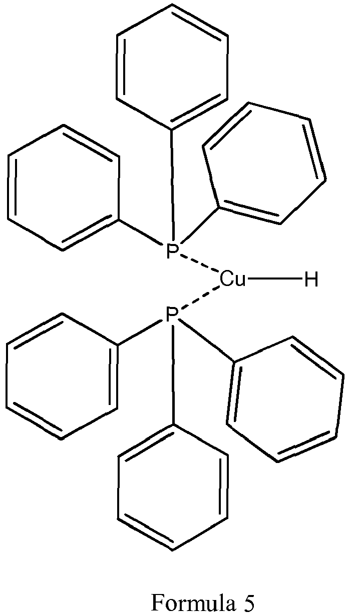

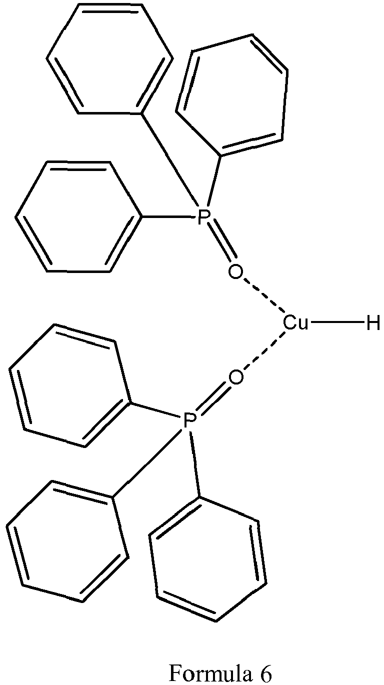

7. Process according to any one of Claims 1 to 6, **characterized in that** the catalyst is prepared *in-situ* before use in polymerization.

8. Process according to any one of Claims 1 to 7 wherein the vinyl chloride polymer is either a vinyl chloride homopolymer or a copolymer of vinyl chloride with one or more than one ethylenically unsaturated monomers selected from the vinylic esters and the (meth) acrylic monomers.

9. Process according to any one of Claims 1 to 8, wherein the vinyl chloride polymer is a vinyl chloride homopolymer or a copolymer of vinyl chloride with vinyl acetate.

10. Process according to any one of Claims 1 to 9, wherein the vinyl chloride polymer is a vinyl chloride homopolymer.

## Patentansprüche

1. Verfahren zum Herstellen eines Vinylchloridpolymers durch Polymerisation von Vinylchlorid und gegebenenfalls wenigstens eines Comonomers von Vinylchlorid, **dadurch gekennzeichnet, dass** der für die Polymerisation verwendete Katalysator wenigstens ein Kupfer(I)-hydrid umfasst.

2. Verfahren gemäß Anspruch 1, wobei das Kupfer(I)-hydrid Formel 1 entspricht,
*n*L----Cu——R Formel 1,
wobei Cu Kupfer(I) ist, R H (Wasserstoff) oder D (Deuterium) ist, L ein Ligand ist und *n* eine ganze Zahl gleich oder größer als 1 ist, die die Zahl von Koordinationsbindungen zwischen Cu und L darstellt.

3. Verfahren gemäß Anspruch 2, wobei *n* eine ganze Zahl gleich 1, 2, 3 oder 4 ist.

4. Verfahren gemäß Anspruch 2 oder 3, wobei L ausgewählt ist aus Triphenylphosphin (PPh₃), Triphenylphosphinoxid (OPPh₃), 2,2'-Bis(diphenylphosphino)-1,1'-binaphthyl (BINAP) der Formel, die durch die nachstehende Formel 2 dargestellt wird, und einem Gemisch davon,

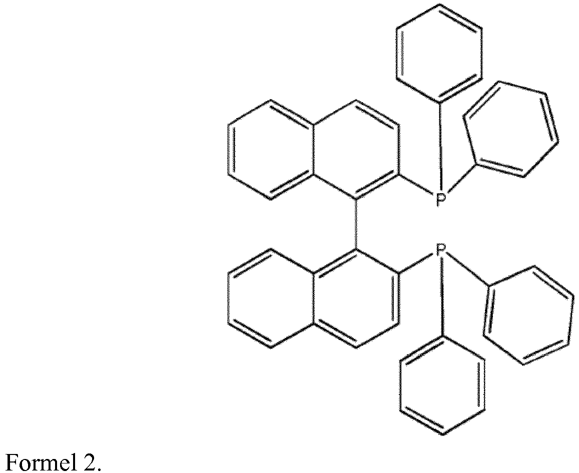

5. Verfahren gemäß einem der Ansprüche 1 bis 4, **dadurch gekennzeichnet, dass** der für die Polymerisation verwendete Katalysator wenigstens ein Kupfer(I)-hydrid umfasst, das Formel 1 entspricht,
*n*L----Cu-R Formel 1,
wobei Cu Kupfer(I) ist, R H (Wasserstoff) ist, L ein Ligand ausgewählt aus Triphenylphosphin (PPh₃), Triphenylphosphinoxid (OPPh₃), 2,2'-Bis(diphenylphosphino)-1,1'-binaphthyl (BINAP) oder einem Gemisch davon ist und *n* eine ganze Zahl gleich 1, 2, 3 oder 4 ist.

6. Verfahren gemäß einem der Ansprüche 1 bis 5, **dadurch gekennzeichnet, dass** der für die Polymerisation verwendete Katalysator wenigstens ein Kupfer(I)-hydrid umfasst, das entweder (BINAP)Cu(I)H, namentlich [2,2'-Bis(diphenylphosphino-κ-*P*)-1,1'-binaphthyl]hydridokupfer(I), das Formel 4 entspricht, oder (PPh₃)₂Cu(I)H, namentlich [Bis(triphenylphosphin-κ-*P*)]hydridokupfer(I), das Formel 5 entspricht, oder (OPPh₃)₂Cu(I)H, namentlich [Bis(triphenylphosphinoxid-κ-*O*)]hydridokupfer(I), das Formel 6 entspricht, umfasst,

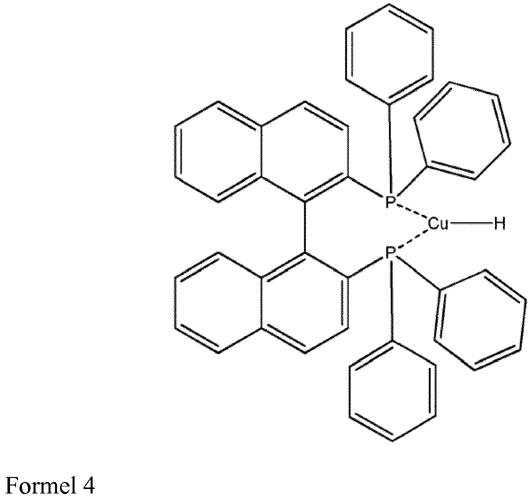

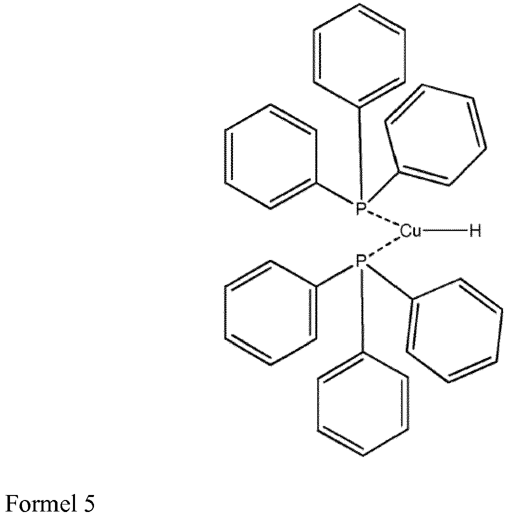

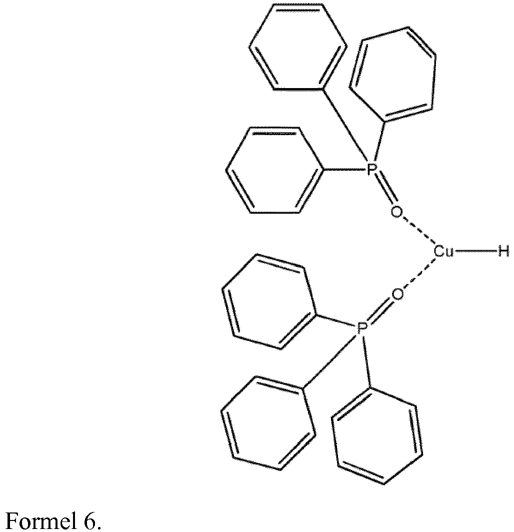

7. Verfahren gemäß einem der Ansprüche 1 bis 6, **dadurch gekennzeichnet, dass** der Katalysator vor der Verwendung bei der Polymerisation *in situ* hergestellt wird.

8. Verfahren gemäß einem der Ansprüche 1 bis 7, wobei das Vinylchloridpolymer entweder ein Vinylchlorid-Homopolymer oder ein Copolymer von Vinylchlorid mit einem oder mehr als einem ethylenisch ungesättigten Monomer ausgewählt aus den Vinylestern und den (Meth)acrylMonomeren ist.

9. Verfahren gemäß einem der Ansprüche 1 bis 8, wobei das Vinylchloridpolymer entweder ein Vinylchlorid-Homopolymer oder ein Copolymer von Vinylchlorid mit Vinylacetat ist.

10. Verfahren gemäß einem der Ansprüche 1 bis 9, wobei das Vinylchloridpolymer ein Vinylchlorid-Homopolymer ist.

## Revendications

1. Procédé de fabrication d'un polymère de chlorure de vinyle par polymérisation de chlorure de vinyle et éventuellement d'au moins un comonomère de chlorure de vinyle, **caractérisé en ce que** le catalyseur utilisé pour la polymérisation comprend au moins un hydrure de cuivre (I).

2. Procédé selon la revendication 1, dans lequel l'hydrure de cuivre (I) répond à la formule 1
*n*L*----*-Cu R Formule 1
dans laquelle Cu est le cuivre (I), R est H (hydrogène) ou D (deutérium), L est un ligand et *n* est un entier égal ou supérieur à 1 représentant le nombre de liaison(s) de coordination entre Cu et L.

3. Procédé selon la revendication 2, dans lequel *n* est un entier égal à 1, 2, 3 ou 4.

4. Procédé selon la revendication 2 ou 3, dans lequel L est choisi parmi la triphénylphosphine (PPh₃), l'oxyde de triphénylphosphine (OPPh₃), le 2,2'-bis(diphénylphosphino)-1,1'-binaphtyle (BINAP) dont la formule est représentée par la formule 2 ci-dessous ou un mélange de ceux-ci.

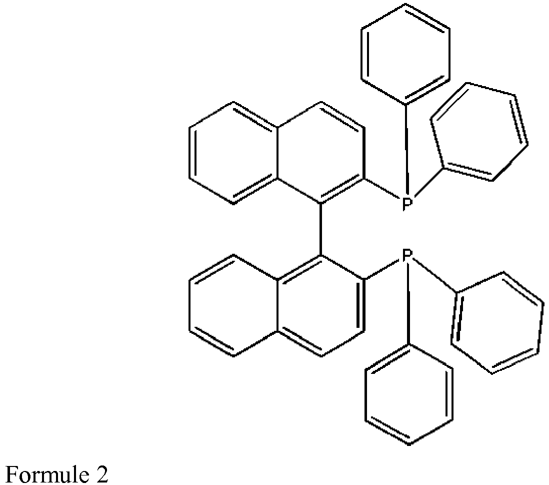

5. Procédé selon l'une quelconque des revendications 1 à 4, **caractérisé en ce que** le catalyseur utilisé pour la polymérisation comprend au moins un hydrure de cuivre (I) qui répond à la formule 1
*n*L*-----*Cu R Formule 1
dans laquelle Cu est le cuivre (I), R est H (hydrogène), L est un ligand choisi parmi la triphénylphosphine (PPh₃), l'oxyde de triphénylphosphine (OPPh₃), le 2,2'-bis(diphénylphosphino)-1,1'-binaphtyle (BINAP) ou un mélange de ceux-ci, et *n* est un entier égal à 1, 2, 3 ou 4.

6. Procédé selon l'une quelconque des revendications 1 à 5, **caractérisé en ce que** le catalyseur utilisé pour la polymérisation comprend au moins un hydrure de cuivre (I) qui comprend (BINAP)Cu(I)H appelé [2,2'-bis(diphénylphosphino-*κ-P*)*-*1,1*'-*binaphtyl]hydrurocuivre (I) répondant à la formule 4, ou (PPh₃)₂Cu(I)H appelé [bis(triphénylphosphine-κ-*P*)]hydrurocuivre (I) répondant à la formule 5 ou (OPPh₃)₂Cu(I)H appelé [bis(triphénylphosphinoxyde-κ-*O*)]hydrurocuivre (I) répondant à la formule 6.

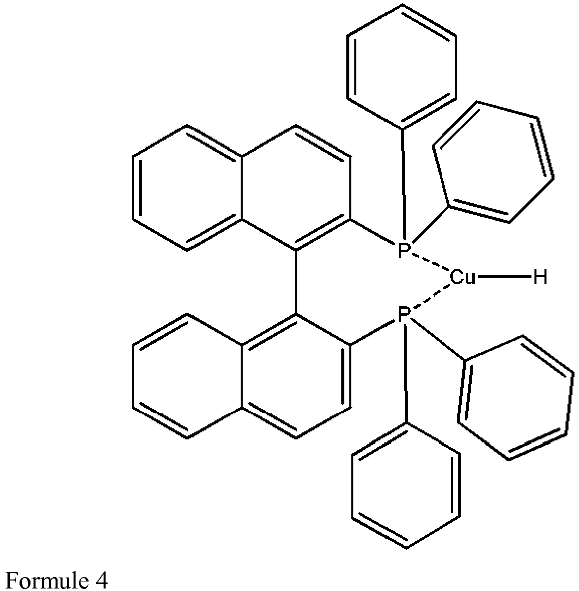

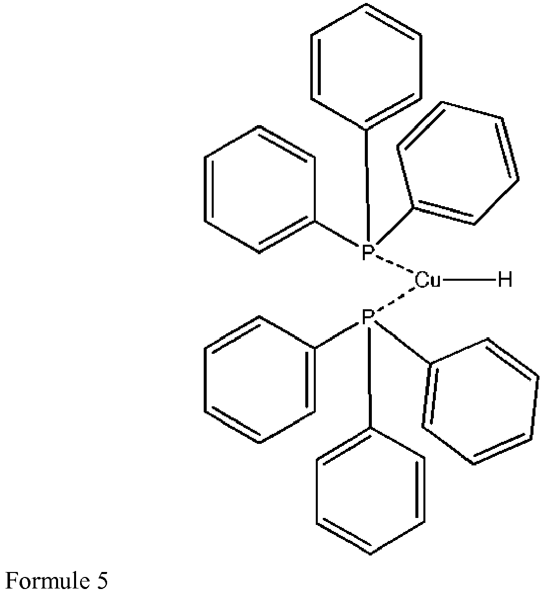

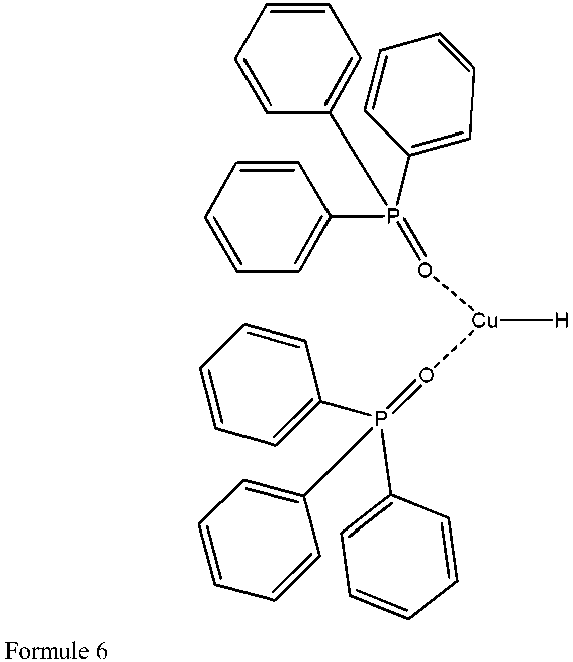

7. Procédé selon l'une quelconque des revendications 1 à 6, **caractérisé en ce que** le catalyseur est préparé *in situ* avant utilisation dans la polymérisation.

8. Procédé selon l'une quelconque des revendications 1 à 7 dans lequel le polymère de chlorure de vinyle est un homopolymère de chlorure de vinyle ou un copolymère de chlorure de vinyle avec un ou plusieurs monomères éthyléniquement insaturés choisis parmi les esters vinyliques et les monomères (méth)acryliques.

9. Procédé selon l'une quelconque des revendications 1 à 8, dans lequel le polymère de chlorure de vinyle est un homopolymère de chlorure de vinyle ou un copolymère de chlorure de vinyle avec l'acétate de vinyle.

10. Procédé selon l'une quelconque des revendications 1 à 9, dans lequel le polymère de chlorure de vinyle est un homopolymère de chlorure de vinyle.
